# EUROPÄISCHE PATENTSCHRIFT

(11) **EP 0 781 096 B1**
(45) Veröffentlichungstag und Bekanntmachung des Hinweises auf die Patenterteilung: **24.10.2001**
(21) Anmeldenummer: 96921813.0
(22) Anmeldetag: 11.07.1996
(51) Int. Cl.: A21C 3/06

(54) **VORRICHTUNG ZUR HERSTELLUNG VON WICKELN AUS TEIGBLÄTTERN UND TRENNBLÄTTERN**
APPARATUS FOR PRODUCING ROLLS OF DOUGH SHEETS WITH SEPARATOR SHEETS
DISPOSITIF POUR LA PRODUCTION DE ROULEAUX DE FEUILLES DE PATE ET DE FEUILLES SEPARATRICES

(30) Priorität: 12.07.1995 AT 119095
(43) Veröffentlichungstag der Anmeldung: 02.07.1997
(73) Patentinhaber: WEWALKA GESELLSCHAFT M.B.H., 2601 Sollenau (AT)
(72) Erfinder: HORVATH, Josef, 7210 Mattersburg (AT)
(74) Vertreter: Casati, Wilhelm, Dipl.-Ing.
(86) Internationale Anmeldenummer: AT9600123
(87) Internationale Veröffentlichungsnummer: WO9702750

(56) Entgegenhaltungen:
- EP-A- 0 160 116
- EP-A- 0 230 335
- WO-A-84/04081

## Beschreibung

Die vorliegende Erfindung betrifft eine Vorrichtung zur Herstellung von Wickeln aus Teigblättern und Trennblättern, mit Fördermitteln für die Zufuhr eines Teigblattes, insbesondere aus Blätterteig, und eines Trennblattes, insbesondere aus Backpapier, in den Einzugspalt einer gabelartigen Haspel, welche beim Einlaufen der führenden Kante des Verbundes aus Teig- und Trennblatt in Drehung versetzbar ist und nach beendetem Drehvorgang in axialer Richtung aus dem gebildeten Wickel zurückziehbar ist.

Eine derartige Vorrichtung ist aus der EP-A-0 230 335 bekannt. Bei dieser Vorrichtung werden die Teigblätter am Ablaufende des Förderbandes durch die Wirkung der Schwerkraft zu einer unterhalb des Ablaufendes angeordneten Haspel senkrecht umgelenkt und im Einzugsspalt der Haspel mit einem gesondert von oben zugeführten Trennblatt vereint und mit diesem gewickelt. Die Trennblätter werden auf einer gesonderten Förderbahn zugeführt, welche perforierte, über Saugkästen geführte Transportbänder umfaßt, und die letzte Strecke bis zum Einzugspalt der Haspel legt jedes Trennblatt frei zurück. Da die Eigensteifigkeit der im allgemeinen aus dünnem Papier bestehenden Trennblätter für diesen Zweck nicht ausreicht, wird jedes Trennblatt während seiner Beförderung auf den Transportbändern mit vertikalen Versteifungssicken versehen. Es ist ersichtlich, daß diese Art der Zuführung der Trennblätter ausgesprochen aufwendig ist und den Einsatz von Saugkästen, Sickenstempeln usw. erfordert.

Um eine Verunreinigung der Haspel durch das eingezogene Teigblatt zu vermeiden und das Abstreifen des gebildeten Wickels von der Haspel zu erleichtern, wird bei der bekannten Konstruktion vorgeschlagen, das Trennblatt über die führende Kante des Teigblattes vorstehen zu lassen und zunächst einige Umdrehungen um die Haspel zu wickeln, bevor das Teigblatt mitgewickelt wird. Wegen der geringen Eigensteifigkeit des Trennblattes ist eine temporäre Fixierung des führenden Abschnittes des Trennblattes auf der Haspel erforderlich. Die temporäre Fixierung erfolgt entweder mit Hilfe einer an der Haspel angelenkten Klemme oder mit Hilfe von Saugöffnungen in der Haspel, was in beiden Fällen zusätzliche Steuer- und Speiseeinrichtungen erforderlich macht.

Die Erfindung setzt sich zum Ziel, eine Vorrichtung zur Herstellung von Wickeln aus Teig- und Trennblättern zu schaffen, die einen störungsunanfälligen, wartungsarmen Betrieb gewährleistet und wesentlich einfacher aufgebaut ist. Dieses Ziel wird mit einer Vorrichtung der eingangs genannten Art erreicht, die sich erfindungsgemäß dadurch auszeichnet, daß die Fördermittel eine Einrichtung zum Ablegen eines Trennblattes auf ein umlaufendes Förderband, eine Einrichtung zum Auflegen eines Teigblattes auf das am Förderband abgelegte Trennblatt in einem vorzugsweise die Summe aus Haspelumfang und Einzugspalttiefe übersteigenden Abstand von der in Vorschubrichtung vorderen Kante des Trennblattes, eine Einrichtung zum zurückgerichteten Umschlagen des von dem Teigblatt vorne vorstehenden Abschnittes des Trennblattes auf die Oberseite des in Vorschubrichtung vorderen Abschnittes des Teigblattes, sowie eine Einrichtung zum Einrühren des mit dem Trennblatt-Umschlag versehenen vorderen Abschnittes des Teigblattes in den Einzugspalt der Haspel umfassen.

Auf diese Weise wird einerseits ein gemeinsamer Zuführungsweg für die Teig- und Trennblätter geschaffen, sodaß sich eine gesonderte aufwendige Behandlung der Trennblätter erübrigt, und anderseits kann durch das Umschlagen des Trennblattes um die Vorderkante des Teigblattes die Eigensteifigkeit dieses Verbundes für den Beginn des Wickelvorganges ausgenützt werden, wobei der Trennblatt-Umschlag bei der bevorzugt gewählten Länge gleichzeitig eine Verschmutzung der Haspel bzw. ein Anhaften des Teigblattes an der Haspel sicher verhindert. Aufwendige Klemm- bzw. Saugeinrichtungen für eine anfängliche Fixierung des Trennblattes an der Haspel können daher entfallen.

Eine bevorzugte Ausführungsform der Erfindung besteht darin, daß die Einrichtung zum Ablegen des Trennblattes eine Vorratsrolle für endloses Trennblatt-Ausgangsmaterial und eine über dem Förderband angeordnete Ablängeinrichtung für das Ausgangsmaterial aufweist, wobei die Einrichtung zum Auflegen des Teigblattes auf das Trennblatt zwischen der Vorratsrolle und der Ablängeinrichtung angeordnet ist. Dadurch kann das Gewicht des abgelegten Teigblattes zur Fixierung des Trennblattes auf dem Förderband ausgenützt werden, sodaß eine gesonderte Saugfixierung des Trennblattes nicht erforderlich ist. Gemäß einer bevorzugten Weiterbildung der Erfindung wird die Ablängeinrichtung für das Trennbaltt von einem das Passieren eines Teigblattes erfassenden, an sich bekannten Sensor gesteuert, sodaß die Länge der Trennblätter an die aktuelle Länge der zugeführten Teigblätter angepaßt wird.

Besonders vorteilhaft ist es, wenn die Einrichtung zum Auflegen des Teigblattes auf das Trennblatt durch ein oberhalb des Auflaufendes des Förderbandes mündendes Zufuhrband gebildet ist. Dadurch kann der im allgemeinen in Förderbandform zur Verfügung stehende Ausgang einer vorgeordneten Teigblattherstellungsmaschine zur Speisung der gegenständlichen Wickelvorrichtung verwendet werden.

Eine besonders vorteilhafte Ausführungsform der Erfindung besteht darin, daß die Einrichtung zum Umschlagen des vorne vorstehenden Abschnittes des Trennblattes eine nach oben gerichtete Blasdüse, vorzugsweise einen Blasbalken, aufweist. Dies gewährleistet ein Hochschlagen des führenden Trennblattabschnittes ohne jede Beeinträchtigung, Zerstörung oder Verunreinigung des Teigblattes. Bevorzugt wird dabei vorgesehen, daß der Blasdüse bzw. dem Blasbalken ein Faltlineal nachgeordnet ist, welches quer über das Förderband und mit geringem Abstand zu diesem verläuft, um den Trennblatt-Umschlag nachhaltiger zu biegen und bis zum nachfolgenden Wickelvorgang temporär zu fixieren.

In jedem Fall ist es besonders vorteilhaft, wenn die Haspel zwei zylindrische Haspelzinken aufweist, die an einem Ende an einer Nabe axialparallel und exzentrisch befestigt sind, welche in einem in Axialrichtung von einem Linearantrieb antreibbaren Schlitten drehbar gelagert ist. Die zylindrische Form der Haspelzinken gewährleistet eine besonders schonende Behandlung des Teigblattes während des Wickelvorganges. An dieser Stelle sei erwähnt, daß aus der EP-A-0 230 335 die Verwendung einer zweizinkigen, auf einem Schlitten axial beweglich gelagerten Haspel an sich bekannt ist, doch hat bei der bekannten Konstruktion die Haspel die Form eines radial geschlitzten zylindrischen Stabes, sodaß durch die scharfen Ränder des Haspeleinzugspaltes die Gefahr eines Bruches der Teigblätter besteht.

Besonders vorteilhaft ist es bei dieser Art von Haspel, wenn die Haspel von einer Mitnehmerscheibe in Drehung versetzbar ist, welche zwei exzentrische Öffnungen für den gleitenden Durchtritt der Haspelzinken aufweist, von einem Drehantrieb antreibbar ist und beim Zurückziehen der Haspel aus dem Wickel einen Anschlag für die axiale Festlegung des Wickels bildet. Dies stellt eine besonders einfache und störungsunanfällige Art des Drehantriebes der Haspel dar.

Gemäß einem weiteren bevorzugten Merkmal der Erfindung umfaßt die ) Einrichtung zum Einführen des mit dem Trennblatt-Umschlag versehenen vorderen Abschnittes des Teigblattes in den Einzugspalt der Haspel ein das Teigblatt mit dem Trennblatt-Umschlag von der Oberfläche des Förderbandes ablösendes und dem Einzugspalt zuführendes Leitblech auf der einen Seite des Haspel und ein Auflaufblech auf der anderen Seite der Haspel. Dies ermöglicht eine Abstützung des Teigblattes zu beiden Seiten der Haspel und verringert weiter die Gefahr eines Bruches des Teigblattes.

Besonders vorteilhaft ist es dabei, wenn das Leitblech und/oder das Auflaufblech mit Hilfe von zugeordneten Linearantrieben in radialer Richtung von der Haspel zurückziehbar sind, sodaß das Leitblech bzw. das Auflaufblech während des Einzugvorganges in die Haspel möglichst nahe an die Haspel herangeführt werden können, um die Abstützung des Teigblattes noch weiter zu verbessern, und anderseits für die ungestörte Drehung der Haspel in eine Freigabestellung bewegt werden können.

Eine besonders bevorzugte Ausführungsform der Erfindung besteht in diesem Fall darin, daß ein Sensor vorgesehen ist, welcher das Durchtreten des mit dem Trennblatt-Umschlag versehenen führenden Abschnittes des Teigblattes durch die Haspel erfaßt und eine Steuereinrichtung freigibt, die in zeitlicher Aufeinanderfolge die Linearantriebe zum Zurückziehen des Leit- bzw. Auflaufbleches, den Drehantrieb zur Drehung der Haspel über eine vorgegebene Anzahl von Umdrehungen, den Linearantrieb zum Zurückziehen der Haspel und die Zurückbewegung aller Linearantriebe in ihre Ausgangsstellungen ansteuert. Diese Art der Steuerung paßt sich automatisch an die tatsächliche Länge und den tatsächlichen Abstand der zugeführten Teigblätter an.

Die Erfindung schafft weiters eine Anlage, die mit zwei oder mehreren erfindungsgemäßen Wickelvorrichtungen ausgestattet ist und sich dadurch auszeichnet, daß die Vorrichtungen parallel nebeneinander angeordnet sind und ein gemeinsames Förderband, einen gemeinsamen Antrieb für die Mitnehmerscheiben der Haspeln und gemeinsame Linearantriebe für die Leit- bzw. Auflaufbleche teilen, wobei die Haspeln mit ihren freien Enden einander zugewandt und axial aufeinander ausgerichtet sind. Der Ausstoß einer derartigen Anlage beträgt das Zwei- oder Mehrfache einer einzelnen Vorrichtung, ohne daß die Konstruktionselemente in gleichem Ausmaß vervielfacht werden müßten.

Die Erfindung wird nachstehend anhand eines in den Zeichnungen dargestellten Ausführungsbeispieles näher erläutert.

Fig. 1 zeigt die Vorrichtung in Seitenansicht.

Fig. 2 gibt die Vorrichtung in der Draufsicht wieder.

Fig. 3 veranschaulicht die Vorrichtung in Stirnansicht vom Ablaufende des Förderbandes her gesehen.

Fig. 4 und 5 sind vergrößerte Ausschnitte aus Fig. 1, welche den Wickelbereich (Fig. 4) bzw. den Zuführungsbereich (Fig. 5) im Detail zeigen.

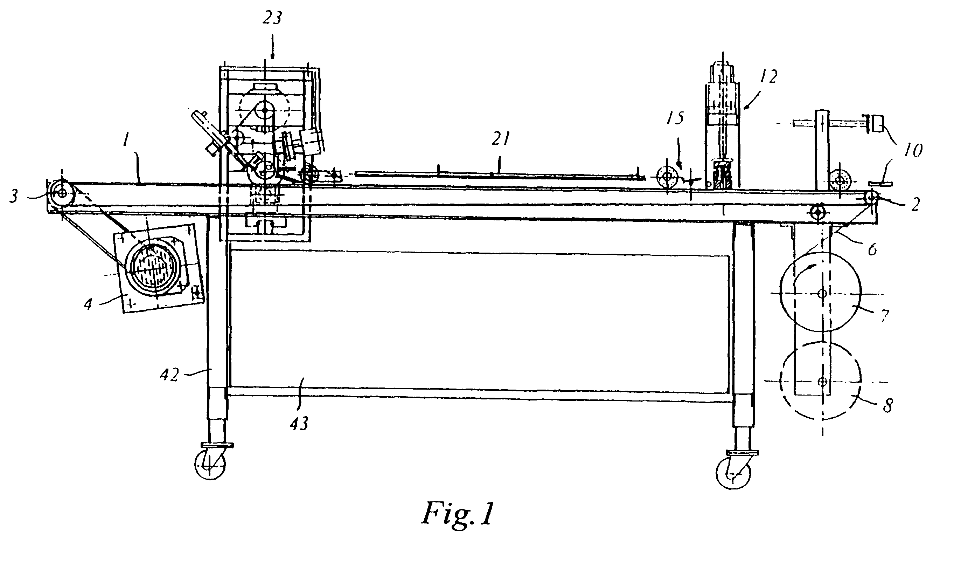

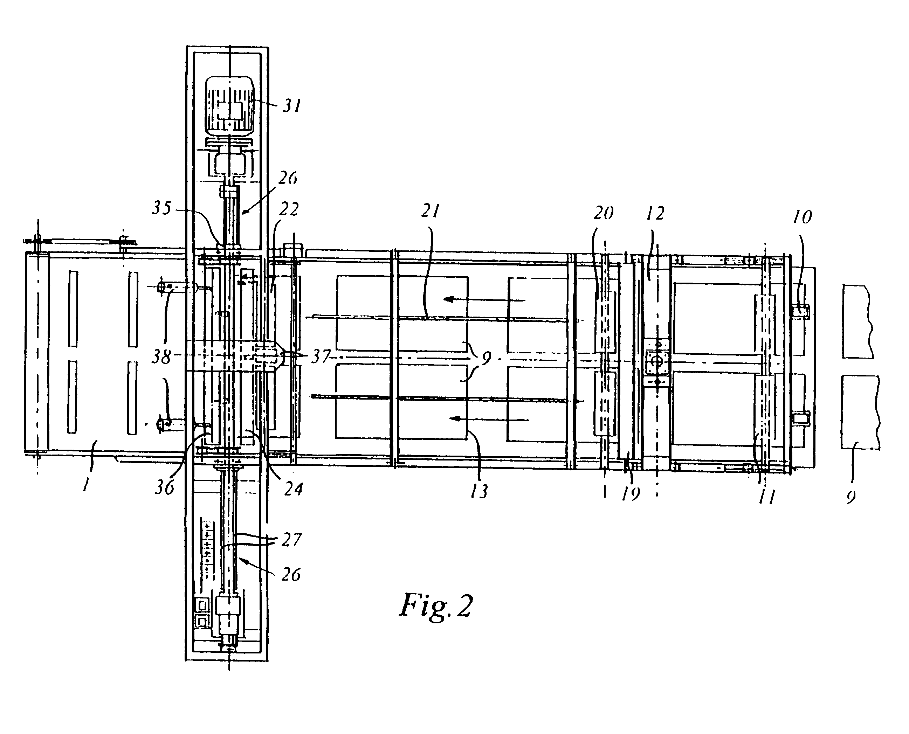

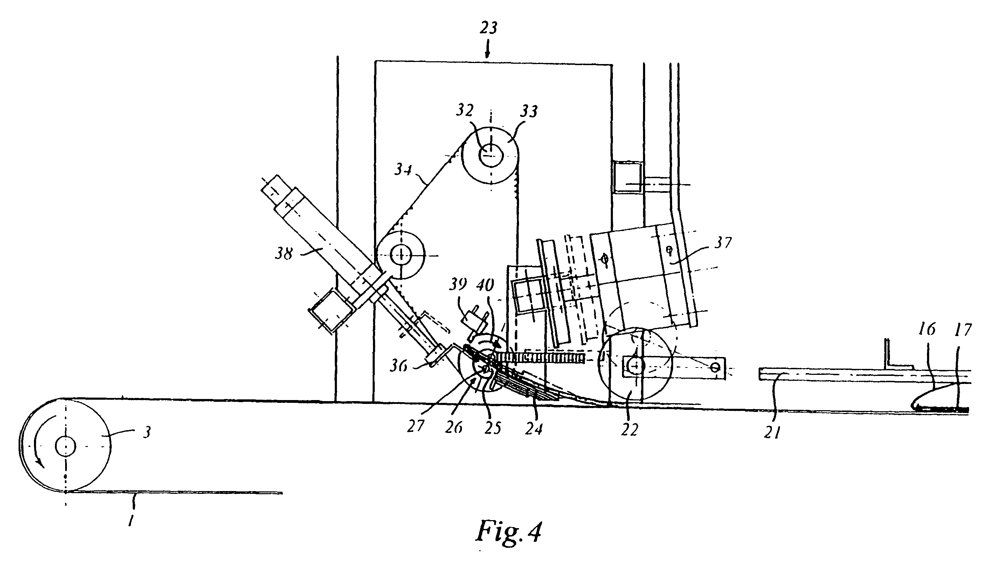

Die in den Fig. 1 bis 5 dargestellte Anlage umfaßt zwei parallele Fertigungsstraßen für die Herstellung von Wickeln aus Teig- und Trennblättern, wie insbesondere aus Fig. 2 ersehen werden kann. Im einzelnen weist die Anlage ein horizontales Förderband 1 auf, das gegen den Uhrzeigersinn um eine erste Walze 2 und eine zweite Walze 3 umläuft. Die Walze 3 wird von einem Elektromotor 4 über einen Antriebsriemen angetrieben. Dem Förderband ist ferner eine Spannwalze 5 zugeordnet.

Auf das Förderband 1 werden zwei -Bahnen 6 eines endlosen Ausgangsmateriales für Trennblätter der herzustellenden Wickel parallel nebeneinanderliegend und aneinander angrenzend abgelegt. Die Bahnen 6 werden von zwei im Bereich unter der Walze 2 des Förderbandes 1 angeordneten Vorratsrollen 7 abgezogen, von denen in Fig. 1 nur die vordere ersichtlich ist. Unterhalb der Vorratsrollen 7 können weitere Vorratsrollen 8 bevorratet sein.

Als Trennblatt-Ausgangsmaterial wird im allgemeinen Papier, Backpapier, Kunststoffolie, Aluminiumfolie usw. verwendet; die Vorrichtung ist jedoch auf kein bestimmtes Trennblatt-Material beschränkt.

Auf die vom Förderband 1 weitertransportierten Bahnen 6 werden von einer (nicht dargestellten) Teigwalz- und Schneidemaschine vorgefertigte Teigblätter 9 in der in Fig. 2 gezeigten Anordnung übergeführt. Das Überführen der Teigblätter 9 auf die Trennblatt-Bahnen 6 kann beispielsweise mit Hilfe eines oberhalb des Auflaufendes des Förderbandes 1 mündenden (nicht dargestellten) Zufuhrbandes erfolgen. Zwischen dem Zufuhrband und dem Förderband 1 durchlaufen die Teigblätter 9 einen z.B. als Lichtschranke ausgebildeten Sensor 10, welcher das Passieren eines Teigblattes 9 erfaßt.

Die hier beschrieben Vorrichtung kann mit jeder beliebigen Art von Teig beschickt werden; ein bevorzugtes Anwendungsgebiet ist jedoch die Verarbeitung von Blätterteig.

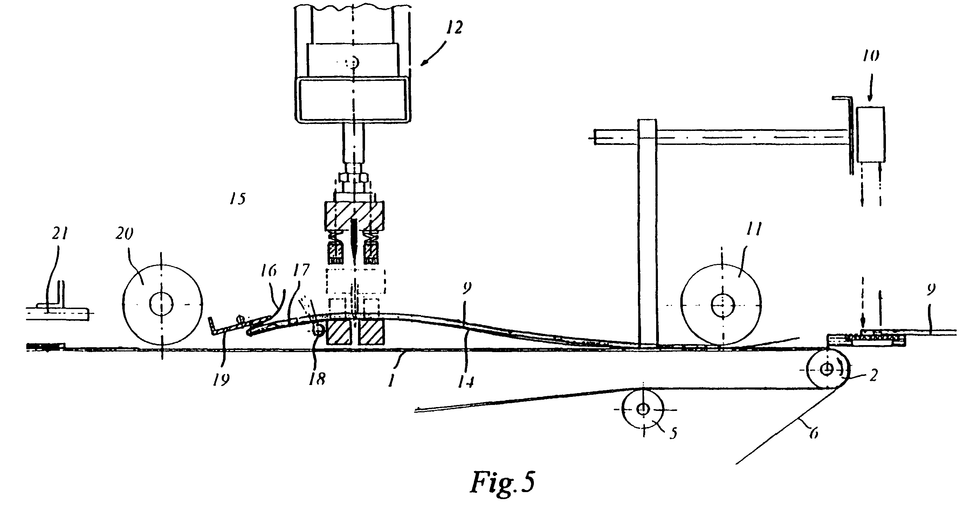

Die Trennblatt-Bahnen 6 mit den darauf liegenden Teigblättern 9 treten unter einer Schaumstoffwalze 11 hindurch (Fig. 5) und durchlaufen eine in Form einer Schlagschere ausgebildete Ablängeinrichtung 12, welche die Bahnen 6 knapp hinter der rückwärtigen Kante 13 der Teigblätter 9 zu einzelnen Trennblättern 14 ablängt. Die Betätigung der Ablängeinrichtung 12 wird abhängig von der Zufuhr der Teigblätter 9 vom Sensor 10 gesteuert.

Anstelle der Zufuhr der Teigblätter 9 an einem Punkt zwischen den Vorratsrollen 7 und der Ablängeinrichtung 12 könnte das Überführen der Teigblätter auch erst nach dem Ablegen von einzelnen Trennblättem 14 auf das Förderband 1 erfolgen, d. h. beispielsweise nach einer Kombination aus Vorratsrollen 6 und Ablängeinrichtungen 12, doch hat die gezeigte Konstruktion den Vorteil, daß das Eigengewicht der Teigblätter 9 die Bahnen 6 vor dem Ablängen bzw. die Trennblätter 14 nach dem Ablängen fixiert.

Anschließend durchlaufen die Trennblätter 14 mit den darauf liegenden Teigblättern 9 eine allgemein mit 15 bezeichnete Einrichtung zum Umschlagen der unter den Teigblättern 9 vorstehenden Abschnitte 16 der Trennblätter 14 zurück auf die Oberseiten der führenden Abschnitte 17 der Teigblätter 9. Diese Einrichtung umfaßt eine mit Druckluft beaufschlagte, nach oben gerichtete Blasdüse bzw. einen Blasbalken 18 und ein nachgeordnetes, quer über das Förderband 1 verlaufendes Faltlineal 19, gefolgt von einer Niederhalterolle 20 aus Schaumstoff. Der führende Abschnitt 17 der Teigblätter 9 wird auf diese Weise mit einem Trennblatt-Umschlag versehen.

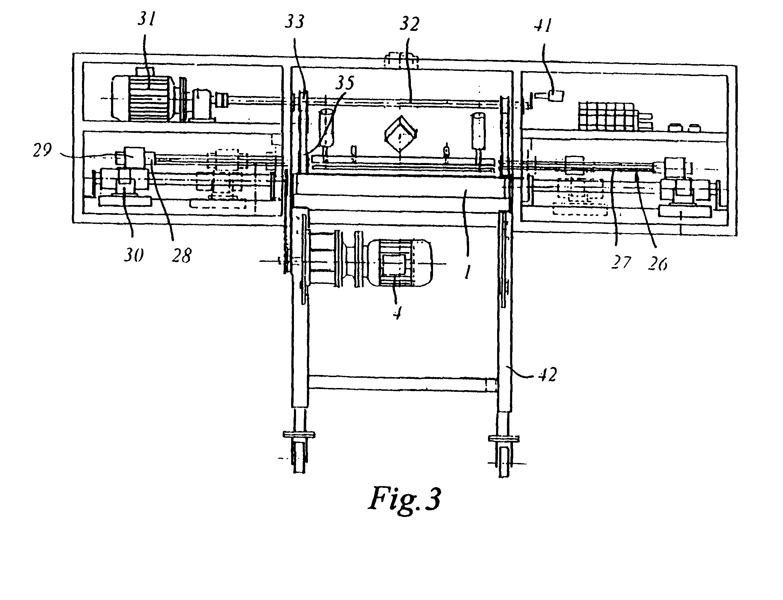

Die weiterhin auf den Trennblättern 14 liegenden und mit dem Trennblatt-Umschlag versehenen Teigblätter 9 treten anschließend unter längsverlaufenden Niederhalteschienen 21 und einer in der Höhe verstellbaren Niederhalterolle 22 aus Schaumstoff hindurch in eine Wickelstation 23 ein. In dieser werden sie von einem Leitblech 24 von der Oberfläche des Förderbandes 1 abgelöst und dem Einzugspalt 25 einer Haspel 26 zugeführt. Die Haspel 26 setzt sich aus zwei zylindrischen Haspelzinken 27 zusammen, die an einem Ende an einer Nabe 28 axialparallel und exzentrisch befestigt sind, welche ihrerseits in einem Schlitten 29 drehbar gelagert ist (Fig. 3). Der Schlitten 29 ist mit Hilfe eines Linearantriebes 30 in Form eines Pneumatikzylinders in Axialrichtung antreibbar.

Auf beiden Seiten des Förderbandes 1 befindet sich je eine Haspel 26, sodaß zwei Wickel parallel hergestellt werden können (siehe Fig. 2). Die Haspeln 26 sind mit ihren freien Enden einander zugewandt und axial aufeinander ausgerichtet. Für beide Haspeln 26 ist ein gemeinsamer Drehantrieb 31 mit einer Welle 32 vorgesehen, auf der Riemenscheiben 33 sitzen, welche über Zahnriemen 34 Mitnehmerscheiben 35 für die Haspeln 26 antreiben. Jede Mitnehmerscheibe 35 weist zwei exzentrische Öffnungen für den gleitenden Durchtritt der Haspelzinken 27 auf.

Auf der dcm Leitblech 24 gegenüberliegenden Seite der Haspeln 26 ist ein Auflaufblech 36 angeordnet, welches gemeinsam mit dem Leitblech 24 zur Abstützung des mit dem Trennblatt-Umschlag versehenen führenden Abschnittes 17 des Teigblattes 9 dient. Zu diesem Zweck sind sowohl das Leitblech 24 als auch das Auflaufblech 36 einerseits so nahe wie möglich an beide Seiten der Haspeln 26 herangeführt und anderseits beweglich gelagert, sodaß sie zur Drehung der Haspel 26 von dieser radial entfernt werden können. Im einzelnen ist das Leitblech 24 am beweglichen Teil eines Linearantriebes 37 befestigt, z.B. eines Pneumatikzylinders. In gleicher Weise ist das Auflaufblech 36 am beweglichen Teil eines Linearantriebes 38, ebenfalls eines Pneumatikzylinders, befestigt.

Dem Auflaufblech 36 ist ein Sensor 39 zugeordnet, welcher das Durchtreten des mit dem Trennblatt-Umschlag versehenen führenden Abschnittes 17 des Teigblattes 14 durch die Haspel 26 erfaßt, insbesondere das Auflaufen dieses Abschnittes auf das Auflaufblech 36, und eine (nicht dargestellte) Steuereinrichtung freigibt, welche in zeitlicher Aufeinanderfolge zunächst die Linearantriebe 37 und 38 ansteuert, um das Leitblech 24 und das Auflaufblech 36 zurückzuziehen, anschließend den Drehantrieb 31 für die Haspeln 26 über eine vorgegebene Anzahl von Umdrehungen einschaltet, und anschließend die Linearantriebe 30 der Schlitten 29 zum Zurückziehen der Haspeln 26 aus den gebildeten Wickeln betätigt. Dabei ziehen sich die Haspelzinken 27 aus den Öffnungen der Mitnehmerscheiben 35 zurück, welche somit auch als Abstreifer für die gebildeten Wickel dienen, indem sie als Anschlag für deren axiale Festlegung wirken.

Die Umdrehung der Haspeln 26 erfolgt in Richtung des Pfeiles 40, wobei die Anzahl der Umdrehungen der Steuereinrichtung von einem mit der Welle 32 des Drehantriebes 31 verbundenen Umdrehungsgeber 41 mitgeteilt wird. Durch das Umschlagen des über die Teigblätter 9 vorstehenden Abschnittes 16 der Trennblätter 14 kommen die Haspelzinken 27 - eine entsprechende Wahl der Länge des Trennblatt-Umschlages vorausgesetzt - ausschließlich mit den Trennblättern 14 in Berührung, sodaß eine Verunreinigung durch die Teigblätter 9 bzw. ein Haftenbleiben der Teigblätter 9 an den Haspeln 26 sicher vermieden wird. Insbesondere sollte die Länge des Trennblatt-Umschlages zumindest gleich der Summe aus Einzugspalttiefe (entspricht etwa dem Durchmesser einer Haspelzinke) und Haspelumfang sein.

Nach dem Zurückziehen der Haspeln 26 fallen die gebildeten Wickel auf das Förderband 1 zurück und werden zum Ablaufende des Förderbandes 1 befördert, wo sie für eine Weiterverarbeitung, z. B. ein Verpacken, zur Verfügung stehen. Nach einer vorgegebenen Zeit steuert die Steuereinrichtung die Linearantriebe 30, 37 und 38 in ihre Ausgangsstellungen zurück, sodaß die Wickelstation 23 für das Einziehen und Wickeln der nachfolgenden mit Trennblättern versehenen Teigblätter bereit ist.

Die gesamte Anlage ist auf einem fahrbaren Gestell 42 montiert, welches auch einen Schalterschrank 43 für die elektrische und pneumatische Steuerung trägt. Durch die Verfahrbarkeit des Gestelles 42 kann die gesamte Anlage an das Ausgangs-Zufuhrband einer Maschine zur Herstellung von Teigblättern herangeschoben und positioniert werden.

Obwohl die dargestellte Anlage zwei nebeneinanderliegende Vorrichtungen zur parallelen Herstellung von jeweils zwei Wickeln umfaßt, wobei die beiden Vorrichtungen ein gemeinsames Förderband 1, einen gemeinsamen Antrieb für die Ablängeinrichtungen 12, einen gemeinsamen Drehantrieb 31 für die Mitnehmerscheiben 35 sowie gemeinsame Linearantriebe 37, 38 für die Leit- bzw. Auflaufbleche teilen, versteht es sich, daß alternativ auch nur eine einzige Vorrichtung vorgesehen werden kann, welche jeweils nur einen Wickel auf einmal herstellt.

Weitere alternative Ausführungsformen der dargestellten Vorrichtung umfassen das Ablegen von bereits vorgeschnittenen Loseblatt-Trennblättern auf das Förderband, auf welche anschließend die Teigblätter übergeführt werden, das Umschlagen der Trennblätter mit Hilfe von nach oben gerichteten Bürsten und nachgeordneten Faltlinealen oder -rollen, die Verwendung eines wesentlich kürzeren Trennblatt-Umschlages zur Materialeinsparung, welcher insbesondere nur das Einführen des Verbundes aus Teigblatt und Trennblatt in den Einzugspalt der Haspel erleichtert, den Verzicht auf jegliche Leit- oder Auflaufbleche, den Einsatz von anders geformten Haspeln, wie sie in der Technik bekannt sind, die Verwendung jedes beliebigen Antriebsmittels, sei es pneumatischer, hydraulischer, elektrischer Art usw. für die beschriebenen Antriebe, bzw. den Einsatz jeder beliebigen, in der Technik bekannten Sensorart für die beschriebenen Sensoren.

## Patentansprüche

1. Vorrichtung zur Herstellung von Wickeln aus Teigblättern und Trennblättern, mit Fördermitteln für die Zufuhr eines Teigblattes, insbesondere aus Blätterteig, und eines Trennblattes, insbesondere aus Backpapier, in den Einzugspalt einer gabelartigen Haspel, welche beim Einlaufen der führenden Kante des Verbundes aus Teig- und Trennblatt in Drehung versetzbar ist und nach beendetem Drehvorgang in axialer Richtung aus dem gebildeten Wickel zurückziehbar ist, **dadurch gekennzeichnet, daß** die Fördermittel eine Einrichtung (7, 12) zum Ablegen eines Trennblattes (14) auf ein umlaufendes Förderband (1), eine Einrichtung zum Auflegen eines Teigblattes (9) auf das am Förderband (1) abgelegte Trennblatt (14) in einem vorzugsweise die Summe aus Haspelumfang und Einzugspalttiefe übersteigenden Abstand von der in Vorschubrichtung vorderen Kante des Trennblattes (14), eine Einrichtung (18, 19) zum zurückgerichteten Umschlagen des von dem Teigblatt (9) vorne vorstehenden Abschnittes (16) des Trennblattes (14) auf die Oberseite des in Vorschubrichtung vorderen Abschnittes (17) des Teigblattes (9), sowie eine Einrichtung (1, 24) zum Einführen des mit dem Trennblatt-Umschlag versehenen vorderen Abschnittes (17) des Teigblattes (9) in den Einzugspalt (25) der Haspel (26) umfassen.

2. Vorrichtung nach Anspruch 1, **dadurch gekennzeichnet, daß** die Einrichtung (7, 12) zum Ablegen des Trennblattes (14) eine Vorratsrolle (7) für endloses Trennblatt-Ausgangsmaterial (6) und eine über dem Förderband (1) angeordnete Ablängeinrichtung (12) für das Ausgangsmaterial aufweist, wobei die Einrichtung zum Auflegen des Teigblattes (9) auf das Trennblatt (14) zwischen der Vorratsrolle (7) und der Ablängeinrichtung (12) angeordnet ist.

3. Vorrichtung nach Anspruch 2, **dadurch gekennzeichnet, daß** die Ablängeinrichtung (12) für das Trennblatt von einem das Passieren eines Teigblattes (9) erfassenden, an sich bekannten Sensor (10) gesteuert ist.

4. Vorrichtung nach einem der Ansprüche 1 bis 3, **dadurch gekennzeichnet, daß** die Einrichtung zum Auflegen des Teigblattes (9) auf das Trennblatt (14) durch ein oberhalb des Auflaufendes des Förderbandes (1) mündendes Zufuhrband gebildet ist.

5. Vorrichtung nach einem der Ansprüche 1 bis 4, **dadurch gekennzeichnet, daß** die Einrichtung (18, 19) zum Umschlagen des vorne vorstehenden Abschnittes (16) des Trennblattes (14) eine nach oben gerichtete Blasdüse, vorzugsweise einen Blasbalken (18), aufweist.

6. Vorrichtung nach Anspruch 5, **dadurch gekennzeichnet, daß** der Blasdüse bzw. dem Blasbalken (18) ein Faltlineal (19) nachgeordnet ist, welches quer über das Förderband (1) und mit geringem Abstand zu diesem verläuft.

7. Vorrichtung nach einem der Ansprüche 1 bis 6, **dadurch gekennzeichnet, daß** die Haspel (26) zwei zylindrische Haspelzinken (27) aufweist, die an einem Ende an einer Nabe (28) axialparallel und exzentrisch befestigt sind, welche in einem in Axialrichtung von einem Linearantrieb (30) antreibbaren Schlitten (29) drehbar gelagert ist.

8. Vorrichtung nach Anspruch 7, **dadurch gekennzeichnet, daß** die Haspel (26) von einer Mitnehmerscheibe (35) in Drehung versetzbar ist, welche zwei exzentrische Öffnungen für den gleitenden Durchtritt der Haspelzinken (27) aufweist, von einem Drehantrieb (31) antreibbar ist und beim Zurückziehen der Haspel (26) aus dem Wickel einen Anschlag für die axiale Festlegung des Wickels bildet.

9. Vorrichtung nach einem der Ansprüche 1 bis 8, **dadurch gekennzeichnet, daß** die Einrichtung (1, 24) zum Einführen des mit dem Trennblatt-Umschlag versehenen führenden Abschnittes (17) des Teigblattes (9) in den Einzugspalt (25) der Haspel (26) ein das Teigblatt (9) mit dem Trennblatt-Umschlag von der Oberfläche des Förderbandes (1) ablösendes und dem Einzugspalt (25) zuführendes Leitblech (24) auf der einen Seite des Haspel (26) und ein Auflaufblech (36) auf der anderen Seite der Haspel (26) umfaßt.

10. Vorrichtung nach Anspruch 9, **dadurch gekennzeichnet, daß** das Leitblech (24) und/oder das Auflaufblech (36) mit Hilfe von zugeordneten Linearantrieben (37, 38) in radialer Richtung von der Haspel (26) zurückziehbar sind.

11. Vorrichtung nach Anspruch 10, **dadurch gekennzeichnet, daß** ein Sensor (39) vorgesehen ist, welcher das Durchtreten des mit dem Trennblatt-Umschlag versehenen vorderen Abschnittes (17) des Teigblattes (9) durch die Haspel (26) erfaßt und eine Steuereinrichtung freigibt, die in zeitlicher Aufeinanderfolge die Linearantriebe (37, 38) zum Zurückziehen des Leit- bzw. Auflaufbleches (24, 36), den Drehantrieb (31) zur Drehung der Haspel (26) über eine vorgegebene Anzahl von Umdrehungen, den Linearantrieb (30) zum Zurückziehen der Haspel (26) und die Zurückbewegung aller Linearantriebe (30, 37, 38) in ihre Ausgangsstellungen ansteuert.

12. Anlage, mit zwei oder mehreren Vorrichtungen nach einem der Ansprüche 1 bis 11, **dadurch gekennzeichnet, daß** die Vorrichtungen parallel nebeneinander angeordnet sind und ein gemeinsames Förderband (1), einen gemeinsamen Antrieb (31) für die Mitnehmerscheiben (35) der Haspeln (26) und gemeinsame Linearantriebe (37, 38) für die Leit- bzw. Auflaufbleche (24, 36) teilen, wobei die Haspeln (26) mit ihren freien Enden einander zugewandt und axial aufeinander ausgerichtet sind.

## Claims

1. An apparatus for producing rolls of pastry sheets and separating sheets, with conveyor means for feeding a sheet of pastry, in particular puff pastry, and a separating sheet, in particular baking paper, into the intake gap of a fork-like reel which can be caused to rotate upon entry of the leading edge of the composite comprising the sheet of pastry and the separating sheet and after the rotation has ended can be withdrawn in axial direction from the formed roll, **characterised in that** the conveyor means comprise a device (7,12) for depositing a separating sheet (14) on a rotating conveyor belt (1), a device for applying a sheet of pastry (9) on to the separating sheet (14) deposited on the conveyor belt (1) at a distance, which preferably exceeds the sum of reel circumference and intake gap depth, from the front edge of the separating sheet (14) viewed in feed direction, a device (18,19) for turning over rearwardly the portion (16) of the separating sheet (14) projecting forwards from the sheet of pastry (9) on to the upper side of the portion (17) of the sheet of pastry (9) at the front in the feed direction, and also a device (1,24) for introducing the front portion (17) of the sheet of pastry (9) provided with the turned-over separating sheet into the intake gap (25) of the reel (26).

2. An apparatus according to Claim 1, **characterised in that** the device (7,12) for depositing the separating sheet (14) has a supply roll (7) for endless separating sheet-starting material (6) and a device (12) mounted above the conveyor belt (1) for cutting to length the starting material wherein the device for applying the sheet of pastry (9) on to the separating sheet (14) is disposed between the supply roll (7) and the cutting device (12).

3. An apparatus according to Claim 2, **characterised in that** the cutting device (12) for the separating sheet is controlled by a per se known sensor (10) detecting the passing of the sheet of pastry (9).

4. An apparatus according to any one of Claims 1 to 3, **characterised in that** the device for applying the sheet of pastry (9) on to the separating sheet (14) is formed by a feed belt discharging above the contact end of the conveyor belt (1).

5. An apparatus according to any one of Claims 1 to 4, **characterised in that** the device (18,19) for turning over the forwardly projecting portion (16) of the separating sheet (14) has an upwardly directed blast nozzle, preferably a blast beam (18).

6. An apparatus according to Claim 5, **characterised in that** a folding guide (19), which extends transversely across the conveyor belt (1) and at a small distance therefrom, is disposed downstream of the blast nozzle or the blast beam (18).

7. An apparatus according to any one of Claims 1 to 6, **characterised in that** the reel (26) has two cylindrical reel prongs (27) which at one end are fastened axially parallel and eccentrically to a hub (28) which is rotatably mounted in a slide (29) which can be driven in axial direction by a linear drive (30).

8. An apparatus according to Claim 7, **characterised in that** the reel (26) can be caused to rotate by a driving disc (35) which has two eccentric openings for the sliding passage of the reel prongs (27), which can be driven by a rotary drive (31) and which upon withdrawal of the reel (26) from the roll forms an abutment for the axial location of the roll.

9. An apparatus according to any one of Claims 1 to 8, **characterised in that** the device (1,24) for introducing the leading portion (17) of the sheet of pastry (9) into the intake gap (25) of the reel (26), which portion is provided with the turned-over separating sheet, comprises a guide plate (24) on one side of the reel (26), which detaches the sheet of pastry (9) with the turned-over separating sheet from the surface of the conveyor belt (1) and which feeds it to the intake gap (25), and comprises a contact plate (36) on the other side of the reel (26).

10. An apparatus according to Claim 9, **characterised in that** the guide plate (24) and/or the contact plate (36) can be withdrawn in a radial direction from the reel (26) by means of associated linear drives (37,38).

11. An apparatus according to Claim 10, **characterised in that** a sensor (39) is provided which detects the passing of the front portion (17) of the sheet of pastry (9) provided with the turned-over separating sheet through the reel (26) and enables a control device which controls the linear drives (37,38) in time sequence for withdrawing the guide plate and contact plate (24,36 respectively), the rotary drive (31) for rotating the reel (26) over a predetermined number of revolutions, the linear drive (30) for withdrawing the reel (26) and the backward movement of all the linear drives (30,37,38) into their starting positions.

12. An installation with two or more apparatuses according to any one of Claims 1 to 11, **characterised in that** the apparatuses are disposed parallel and side by side and share a common conveyor belt (1), a common drive (31) for the driving discs (35) of the reels (26) and common linear drives (37,38) for the guide and contact plates (24,36), wherein the reels (26) face one another at their free ends and are aligned axially to one another.

## Revendications

1. Dispositif destiné à la réalisation de rouleaux formés par une feuille de pâte et une feuille de séparation, comprenant des organes de transport pour l'amenée d'une feuille de pâte, en particulier de la pâte feuilletée, et d'une feuille de séparation, en particulier un papier de cuisson, vers la fente d'introduction d'une enrouleuse en forme de fourche, qui est mise en rotation par l'introduction du bord avant de la couche mixte formée par la feuille de pâte et la feuille de séparation et qui, à la fin du processus de rotation, peut être retirée dans le sens axial hors du rouleau formé, **caractérisé en ce que** les organes de transport comportent un dispositif (7, 12) destiné à déposer une feuille de séparation (14) sur un tapis de transport continu (1), un dispositif destiné à poser une feuille de pâte (9) sur la feuille de séparation (14) déposée sur le tapis de transport (1) à une distance du bord avant de la feuille de séparation (14), par référence au sens d'avance, laquelle distance est de préférence supérieure à la somme de la circonférence de l'enrouleuse et de la profondeur de la fente d'introduction, un dispositif (18, 19) destiné à replier en sens inverse la partie (16) de la feuille de séparation (14), dépassant à l'avant la feuille de pâte (9), sur la face supérieure de la partie avant (17), par référence au sens d'avance, de la feuille de pâte (9), ainsi qu'un dispositif (1, 24) destiné à introduire dans la fente d'introduction (25) de l'enrouleuse (26) la partie avant (17) de la feuille de pâte (9), munie du repli de la feuille de séparation.

2. Dispositif selon la revendication 1, **caractérisé en ce que** le dispositif (7, 12) destiné à déposer la feuille de séparation (14) comporte un rouleau d'admission (7) pour une bande continue de feuille de séparation (6) et un dispositif de tronçonnage (12) de la bande continue, disposé au-dessus du tapis de transport (1), le dispositif destiné à poser la feuille de pâte (9) sur la feuille de séparation (14) étant disposé entre le rouleau d'admission (7) et le dispositif de tronçonnage (12).

3. Dispositif selon la revendication 2, **caractérisé en ce que** le dispositif de tronçonnage (12) de la feuille de séparation est commandé par un capteur (10) connu en soi, destiné à enregistrer le passage d'une feuille de pâte (9).

4. Dispositif selon l'une des revendications 1 à 3, **caractérisé en ce que** le dispositif destiné à poser la feuille de pâte (9) sur la feuille de séparation (14) est formé par une bande d'amenage qui débouche au-dessus de l'extrémité d'entrée du tapis de transport (1).

5. Dispositif selon l'une des revendications 1 à 4, **caractérisé en ce que** le dispositif (18, 19), destiné à replier la partie (16) de la feuille de séparation (14) dépassant à l'avant, comporte une buse soufflante orientée vers le haut, de préférence une barre soufflante (18).

6. Dispositif selon la revendication 5, **caractérisé en ce que** la buse soufflante (10) ou la barre soufflante (18) est disposée en aval d'une règle de pliage (19), qui s'étend transversalement au-dessus du tapis de transport (1) à une faible distance de celui-ci.

7. Dispositif selon l'une des revendications 1 à 6, **caractérisé en ce que** l'enrouleuse (26) est munie de deux dents cylindriques (27), qui sont fixées parallèlement à l'axe et excentriquement par une extrémité sur un moyeu (28), qui est monté de manière à pouvoir tourner sur un chariot (29), lequel peut être actionné dans le sens axial par un mécanisme d'entraînement linéaire (30).

8. Dispositif selon la revendication 7, **caractérisé en ce que** l'enrouleuse (26) peut être mise en rotation par un disque d'entraînement (35), qui comporte deux orifices excentriques pour le passage sans frottement des dents (27) de l'enrouleuse, qui peut être actionné par un moteur à mouvement rotatif (31) et qui forme, au moment du retrait de l'enrouleuse (26) hors du rouleau, une butée destinée à arrêter le rouleau dans le sens axial.

9. Dispositif selon l'une des revendications 1 à 8, **caractérisé en ce que** le dispositif (1, 24) destiné à introduire dans la fente d'introduction (25) de l'enrouleuse (26) la partie avant (17) de la feuille de pâte (9), munie du repli de la feuille de séparation, comporte sur l'un des côtés de l'enrouleuse (26) une plaque de guidage (24) qui détache de la surface du tapis de transport (1) la feuille de pâte (9) avec le repli de la feuille de séparation et l'engage dans la fente d'introduction (25), et sur l'autre côté de l'enrouleuse (26) une plaque inclinée (36).

10. Dispositif selon la revendication 9, **caractérisé en ce que** la plaque de guidage (24) et/ou la plaque inclinée (36) peuvent être retirées dans le sens radial de l'enrouleuse (26) au moyen de mécanismes d'entraînement linéaire (37, 38) associés.

11. Dispositif selon la revendication 10, **caractérisé en ce qu'**il est prévu un capteur (39) qui enregistre le passage à travers l'enrouleuse (26) de la partie avant (17) de la feuille de pâte (9) munie du repli de la feuille de séparation et qui débloque un dispositif de commande qui commande successivement dans le temps les mécanismes d'entraînement linéaire (37, 38) pour retirer la plaque de guidage et la plaque inclinée (24, 36), le moteur à mouvement rotatif (31) pour faire tourner l'enrouleuse (26) sur un nombre de tours prédéfini, le mécanisme d'entraînement linéaire (30) pour retirer l'enrouleuse (26) et actionner le mouvement de retour de tous les mécanismes d'entraînement linéaire (30, 37, 38) vers leur position de départ.

12. Installation comprenant un ou plusieurs dispositifs selon l'une des revendications 1 à 11, **caractérisée en ce que** les dispositifs sont disposés parallèlement les uns à côté des autres et comportent un tapis de transport (1) commun, un moteur (31) commun, qui actionne les disques d'entraînement (35) des enrouleuses (26), et des mécanismes d'entraînement linéaire (37, 38) communs pour les plaques de guidage et les plaques inclinées (24, 36), les enrouleuses (26) étant disposées les unes face aux autres par leurs extrémités libres et alignées dans le sens axial les unes par rapport aux autres.
